# EUROPÄISCHE PATENTANMELDUNG

(11) **EP 1 895 320 A1**
(43) Veröffentlichungstag der Anmeldung: **05.03.2008**
(21) Anmeldenummer: 06027071.7
(22) Anmeldetag: 19.01.2007
(51) Int. Cl.: G01S 5/14, A63F 13/00

(54) **Navigations-Stick für die Sony PSP**

(30) Priorität: 30.08.2006 DE 102006040583
(71) Anmelder: Helmecke, Uwe, 41564 Kaarst (DE)
(72) Erfinder: Helmecke, Uwe, 41564 Kaarst (DE)

(57) **Zusammenfassung**

Der Navigationsstick für die Spielekonsole der Marke Sony, PSP, verfügt über einen USB-Anschluss und wird über diesen mit der Sony PSP verbunden.

Er ist mit einer Antenne zum Empfang von GPS-/ bzw. Galilieosignalen ausgestattet, die von in der Erdumlaufbahn befindlichen Satteliten ausgestrahlt werden. Die Signale werden an einen Mikrochip gesandt, der in dem Navigationsstick eingebaut ist. Dieser Mikrochip wandelt die Signale in Geokoordinaten um, anhand derer unter Zuhilfenahme entsprechender Navigationssoftware, die über gesonderte Speichermedien zugeführt wird, eine visuelle und akustische Navigation über die PSP möglich ist.

## Beschreibung

Der Navigations-Stick für die Sony PSP ist mit einem USB-Anschluss ausgestattet und dient zum Empfangen/Senden von GPS-Daten bzw. Galileo-Daten zu Navigationszwecken unter Verwendung entsprechender Navigationssoftware, die auf einem Speichermodul zugeführt wird.

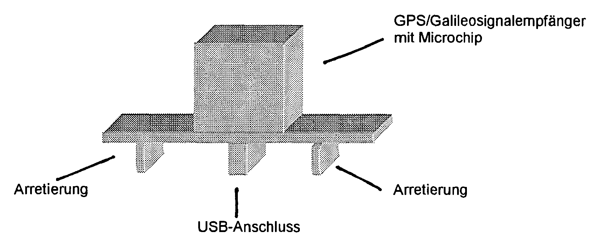

## Patentansprüche

1. Navigationsstick mit USB-Anschluss für die Sony PSP, **gekennzeichnet dadurch, dass** ein Mikrochip eingebaut ist, der gesendete GPS- bzw. Galileosignale zu Navigationszwecken verarbeitet,damit unter Zuhilfenahme von Navigationssoftware, die über gesonderte Speichermedien zugeführt wird, sowohl akustisch als auch visuell eine Navigation über die PSP möglich ist.

## Geänderte Patentansprüche

### Geänderte Patentansprüche gemäss Regel 137(2) EPÜ.

**1.** Navigationsstick mit USB-Anschluss für die Sony PSP, **gekennzeichnet dadurch, dass** ein Mikrochip eingebaut ist, der gesendete Galileosignale zu Navigationszwecken verarbeitet, damit unter Zuhilfenahme von Navigationssoftware, die über gesonderte Speichermedien zugeführt wird, sowohl akustisch als auch visuell eine Navigation über die PSP möglich ist.
